(19) **Europäisches Patentamt** / **European Patent Office** / **Office européen des brevets**

(11) **EP 2 561 137 B1**

(12) **EUROPEAN PATENT SPECIFICATION**

(45) Date of publication and mention
of the grant of the patent:
**23.05.2018 Bulletin 2018/21**

(21) Application number: **11716481.4**

(22) Date of filing: **18.04.2011**

(51) Int Cl.:
*D21H 17/28* (2006.01)        *D21H 17/29* (2006.01)
*D21H 19/36* (2006.01)        *D21H 19/44* (2006.01)
*D21H 19/48* (2006.01)        *D21H 19/54* (2006.01)
*C09D 103/02* (2006.01)        *C08L 3/02* (2006.01)
*C08L 3/04* (2006.01)        *C09D 103/04* (2006.01)
*C09J 103/02* (2006.01)        *C09J 103/04* (2006.01)

(86) International application number:
**PCT/EP2011/001959**

(87) International publication number:
**WO 2011/131330 (27.10.2011 Gazette 2011/43)**

(54) **BINDERS**

BINDEMITTEL

LIANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.04.2010 EP 10004205**

(43) Date of publication of application:
**27.02.2013 Bulletin 2013/09**

(73) Proprietor: **Cargill, Incorporated
Wayzata, MN 55391 (US)**

(72) Inventors:
• **MARAKAINEN, Timo
47800 Krefeld (DE)**

• **ROUX, Rudy
F-59500 Douai (FR)**

(74) Representative: **Dottridge, Cass A.C. et al
Cargill R&D Centre Europe BVBA
Bedrijvenlaan 9
2800 Mechelen (BE)**

(56) References cited:
**EP-A1- 1 964 969        WO-A1-2005/047385
WO-A1-2009/079268        US-A- 2 341 523
US-A- 4 239 592        US-A- 4 632 848
US-A1- 2003 173 045        US-A1- 2007 102 129
US-A1- 2007 110 799        US-A1- 2009 017 235
US-B1- 6 413 372**

**Description**

Technical Field of the Invention

The present invention relates to natural binders for coating compositions and, in particular, to the use of such binders to replace synthetic compounds.

Background of the Invention

Coating compositions are used on a number of substrates including, amongst others, metals, plastics, textiles and paper. They help to protect and enhance the feel and appearance of the surfaces to which they are applied. They may also improve other characteristics such as printability, water resistance, reflectivity or strength.

The make up of a coating composition will depend on its desired end-use. Typically, a paper coating composition (also known as a "coating colour") will contain pigments, binders and thickeners.

Binders have traditionally been based on synthetic materials such as latex. However, these are relatively expensive and they do not meet paper manufacturers' growing demands for "green" or environmentally-friendly/renewable products. There has therefore been a strong drive to replace synthetic binders with more natural ones. Starch, in particular, has been proposed as a possible alternative. Unfortunately, there are limits as to how much starch can be used before paper quality is adversely affected. In particular, it has been observed that, at higher concentrations, starch can cause undesirable mottling and will negatively impact surface strength and coating colour rheology.

As such, there is still a clear need in the art for new and improved natural binders that can be used in coating compositions to reduce the requirement for synthetic binders without adversely affecting the quality of either the coating composition itself or of the paper to which it is applied. The present invention provides such a binder.

Summary of the Invention

According to one aspect of the present invention, there is provided a coating composition comprising: (a) a non-thinned starch; (b) a thinned starch; and (c) pigment; characterized in that the non-thinned starch is selected from the group consisting of: native starches, acetylated starches, cross-linked starches and mixtures thereof; the thinned starch is a dextrin; and in that the non-thinned and thinned starches are present in a weight ratio of 30:70 to 1:99.

According to a further aspect of the present invention, there is provided a process for producing a coating composition, characterized in that it comprises the step of mixing (a) a non-thinned starch and (b) a thinned starch with (c) pigment and (d) one or more optional ingredients wherein the non-thinned starch is selected from the group consisting of: native starches, acetylated starches, cross-linked starches and mixtures thereof; the thinned starch is a dextrin; and the non-thinned and thinned starches are present in a weight ratio of 30:70 to 1:99.

According to an additional aspect of the present invention, there is provided the use of a blend of (a) a non-thinned starch and (b) a thinned starch, to replace, in whole or in part, synthetic binders in coating compositions, characterized in that the non-thinned starch is selected from the group consisting of: native starches, acetylated starches, cross-linked starches and mixtures thereof; the thinned starch is a dextrin; and in that the non-thinned and thinned starches are present in a weight ratio of 30:70 to 1:99.

Brief Description of the Figures

Figure 1 - Anton Paar Viscosity (measured in mPa.s)
Figure 2 - Blade Pretention (start/stop - in mm)
Figure 3 - Gardner Paper Gloss (75°)
Figure 4 - IGT Dry Pick measurements (L-oil)
Figure 5 - Prüfbau Printing Gloss
Figure 6 - Brookfield Viscosity (profiled at increasing temperatures)
Figures 7 and 8 - Anton Paar Viscosity
Figure 9 - AA-GWR water release values (in $g/m^2$)
Figure 10 - ACAV Capillary Viscosity (profiled at different shear rates)
Figure 11 - Blade Pretension (start/stop - in mm)
Figure 12 - AA-GWR water release (profiled against Anton Paar Viscosity)

Detailed Description of the Invention

The present invention provides a starch mixture for use in the preparation of coating compositions - and to coating compositions prepared therewith - characterized in that the starch mixture comprises (a) a non-thinned starch; and (b) a thinned starch.

**Non-Thinned Starch**

The term "non-thinned starch", as used herein, refers to any starch molecule that has not been substantially degraded by hydrolysis. The non-thinned starch of the present invention may be starch of any origin. For example, it may be corn starch, potato starch, wheat starch, pea starch, waxy starch, or a mixture of two or more thereof. Preferably, it will be selected from corn starch, potato starch, waxy starch and mixtures of two or more thereof. A waxy starch is a starch that contains more than 90% amylopectin molecules. Waxy starches suitable for use in the present invention include waxy corn starch, waxy wheat starch and waxy potato starch. Preferably, the non-thinned starch will be a waxy starch, more preferably a waxy corn starch. It may be a native starch, a modified starch or a mixture of two or more native and/or modified starches.

The term "modified starch", as used herein, refers to a starch whose structure has been altered by chemical, enzymatic or physical (e.g. heat) treatment. It may include, for instance, esterified starches (such as acetylated or nOSA starches), etherified starches (such as hydroxypropylated or hydroxyethylated starches), cationic starches, cross-linked starches, oxidised starches and mixtures of two or more thereof. It may also include starches which have been subjected to two or more such modifications (e.g. cationic cross-linked starches). Preferably, the non-thinned starches will be selected from the group consisting of: native starches, acetylated starches, cross-linked starches and mixtures of two or more thereof.

According to one particular embodiment, the non-thinned starch may be cold water soluble, i.e. soluble at neutral pH and at room temperature. Advantageously, it will be soluble at pH 10 and 35°C (i.e. the conditions under which it would typically be used in a coating composition). For reference, solubility as used herein generally refers to the fact that, under the specified conditions (i.e. in cold water or at pH 10 and 35°C), the starch granules are able to swell, forming a viscous, colloidal dispersion. Thus, cold water soluble starches may also be referred to as "cold water swellable" starches. Preferably, the non-thinned starch will have a solubility, measured according to Method 1 set out below, of at least 50%, more preferably of at least 75%. According to one particular embodiment, the non-thinned starches of the present invention will be pregelatinized.

**Thinned Starch**

The term "thinned starch", as used herein, refers to starch molecules that have been degraded through hydrolysis (resulting in molecules with a lower molecular weight and a lower viscosity potential than the corresponding native starches). Thinned starches suitable for use in the present invention will preferably have a Brookfield viscosity in the range of 10 to 10,000 mPa.s, more preferably of 10 to 5000 mPa.s, more preferably of 15 to 1000 mPa.s, more preferably of 20 to 500 mPa.s, more preferably 50 to 300 mPa.s (measured at 25% dry substance after batch cooking, 40°C and 100 rpm - see Method 8).

As will be known to a person skilled in the art, thinned starches can be produced in a number of ways, including for example acid thinning, peroxide thinning, hypochloride thinning, persulfate thinning, enzymatic thinning and thermal degradation. Preferably, the thinned starches of the present invention will be obtained by thermal degradation. Thermal degradation is achieved by heat treating starch molecules under dry or semi-dry conditions (i.e. no more than 25% moisture). Preferably, the thinned starches will be dextrins obtained through thermal degradation. The thinned starches may be obtained from native starches or from previously modified starches (as defined above) and/or they may be further modified after thinning. Thus, for example, the thinned starches may include substituted dextrins such as cationic dextrins.

The thinned starches of the present invention may be produced from starches of any type and of any origin. Preferably, however, they will be produced from wheat starch, corn starch and mixtures thereof. According to one preferred embodiment of the present invention, the thinned starch will be a wheat or corn dextrin, most preferably a corn dextrin.

As for the non-thinned starches, the thinned starch may also be cold water soluble. Preferably, they will be soluble at pH 10 and 35°C (wherein "soluble" refers to a solubility of at least 50%, preferably of at least 75% - as defined above).

**Starch Mixture**

The term "starch mixture", as used herein, may refer to a dry mix or to an aqueous composition comprising the non-thinned and thinned starches defined above. The non-thinned and thinned starch will preferably be mixed in a weight ratio of 50:50 to 1:99. More preferably, the ratio will be in the range of 30:70 to 1:99, more preferably of 15:85 to 5:95. According to one particular embodiment, the non-thinned and thinned starches will be in a weight ratio of approximately 10:90. By way of illustration, the starch mixture may include (a) a native waxy corn starch and (b) a corn dextrin in a weight ratio of approximately 10:90.

The starch mixture may also include one or more additional ingredients. According to one particular embodiment, it may contain one or more emulsifiers such as lecithin and/or one or more biocides or other anti-microbial agents. It may also include one or more wet-resistance agents and/or cross-linking agents such as aldehyde-, epoxide- or chlorohydrine-containing compounds. In particular, it may be desirable to include a thinning agent, such as a chemical (e.g. persulfate), enzymatic or acid-thinning agent.

The starch mixture of the present invention may be used in numerous applications. For example, it could be used in sizing compositions (such as paper surface sizing compositions) or in coating compositions. In particular, it may be used as a binder and/or as a rheology modifier in coating compositions.

## Coating Composition

A coating composition is any composition which, when applied to the surface of a substrate, contributes to an improvement in one or more properties of that substrate, for example in its appearance, feel, printability, strength, water resistance, reflectivity and/or functionality. The term "coating composition" as used herein will refer to any aqueous solution or dispersion capable of contributing to such an improvement, and to dry mixes suitable for use in their preparation. Preferably, it will refer to a paper coating composition (also known as a "coating color").

The makeup of the composition will depend on its end use and, in particular, on the type of substrate it is intended to coat. In any event, the composition of the present invention will comprise a non-thinned starch and a thinned starch as defined above together with pigment.

Examples of suitable pigments include, without limitation: clays such as kaolin, structured and calcined clays, hydrated aluminum silicates, bentonite, natural and synthetic calcium carbonate, calcium sulphate (gypsum), silicas, precipitated silicas, titanium dioxide, alumina, aluminium trihydrate, plastic (polystyrene) pigments, satin white, talc, barium sulphate, zinc oxide and mixtures of two or more thereof. The appropriate pigment will readily be selected by a person skilled in the art depending on the type of coating composition to be obtained.

The composition may also include one or more additional ingredients. In the case of a paper coating composition, these will preferably include a thickener and one or more additives. Examples of suitable thickeners include cellulose ethers (such as CMC, hydroxyethyl cellulose, hydroxypropyl cellulose, ethylhydroxyethyl cellulose and methyl cellulose), alginates (such as sodium alginate), xanthan, carrageenans, galactomannans (such as guar), native or modified starches (such as roll-dried starch), synthetic polymers (such as polyacrylates) and mixtures of two or more thereof.

Examples of possible additives include: surfactants (e.g. cationic surfactants, anionic surfactants, non-ionic surfactants, amphoteric surfactants and fluorinated surfactants), hardeners (e.g. active halogen compounds, vinylsulfone compounds, epoxy compounds, etc.), dispersing agents (e.g. polyacrylates, polyphosphates, polycarboxylates, etc.), flowability improvers, lubricants (e.g. calcium, ammonium and zinc stearate, wax or wax emulsions, alkyl ketene dimer, glycols, etc.), antifoamers (e.g. octyl alcohol, silicone-based antifoamers, etc.), releasing agents, foaming agents, penetrants, optical brighteners (e.g. fluorescent whiteners), preservatives (e.g. benzisothiazolone and isothiazolone compounds), biocides (e.g. metaborate, thiocyanate, sodium benzonate, etc.), yellowing inhibitors (e.g. sodium hydroxymethyl sulfonate, sodium p-toluenesulfonate, etc.), ultraviolet absorbers (e.g. benzotriazole compounds having a hydroxydialkylphenyl group at the 2 position), antioxidants (e.g. sterically hindered phenol compounds), insolubilisers, antistatic agents, pH regulators (e.g. sodium hydroxide, sulfuric acid, hydrochloric acid, etc.), water-resistance agents (e.g. ketone resin, anionic latex, glyoxal, etc.), wet and/or dry strengthening agents (e.g. glyoxal based resins, oxidised polyethylenes, melamine resins, urea formaldehyde, etc.), cross-linking agents, gloss-ink holdout additives, grease and oil resistance additives, leveling and evening aids (e.g. polyethylene emulsions, alcohol/ethylene oxide, etc.), and mixtures of two or more thereof.

The coating composition may also include a certain amount of synthetic binder. Although the aim of the present invention is to replace synthetic binders, it may occasionally be desired to use both natural and synthetic binders together. In particular, it may be desirable to include some latex-type binders such as styrene butadiene, styrene acrylate, vinyl polymer based latexes and polyvinyl alcohol or mixtures of two or more thereof.

The amount of each of these ingredients to be added, if at all, will be determined in accordance with standard practice and with the desired properties of the particular coating composition in mind. Pigments will generally be present in the largest amount. All other components can therefore be expressed relative to pigment content, i.e. as parts per 100 parts pigment. Thus, for 100 parts pigment, the coating composition of the present invention will preferably comprise 1-50 parts of the starch mixture defined above, 0-30 parts synthetic binder, 0-5 parts thickener and 0-5 parts additive(s) (all calculated on a dry weight basis). Advantageously, it will comprise 100 parts pigment, 5-25 parts starch mixture, 1-10 parts synthetic binder, 0-2 parts thickener and 0-2 parts additive(s). More preferably, the composition will comprise 5-15 parts starch mixture, 3-8 parts synthetic binder, 0-1 parts thickener and 0-1 parts additive(s). The exact make-up of the composition will readily be determined by the skilled person depending on the desired end properties of the coating composition.

When in its aqueous, ready-to-use form, the composition of the invention will preferably comprise at least 50% by weight dry substance, more preferably 50-80%. The composition will advantageously have a pH of 7 to 12. Preferably, the pH will be from 8 to 10.

**Process**

The coating composition of the present invention can be prepared using standard methods known in the art. In its simplest form, the dry ingredients will be added to water either all at once, in batches or one after the other. For example, the pigment (and any optional ingredients such as thickeners or additives) may be mixed with water first followed by the non-thinned and thinned starches, themselves either separately or as a starch mixture. Alternatively, all the dry ingredients may be blended to form a pre-mix which is then added to water.

As stated above, the non-thinned and thinned starches used in accordance with the invention may be cold water soluble. If this is not the case, however, they may need to be treated before use to increase their solubility and, in particular, to ensure they would be readily soluble in a coating composition (i.e. at pH 10 and 35°). Thus, according to one embodiment of the present invention, there is provided a process for producing a coating composition comprising the steps of:

- providing a non-thinned starch and a thinned starch as defined above;
- solubilising the non-thinned starch and/or the thinned starch; and
- mixing the non-thinned and thinned starches with at least one pigment.

Solubilisation may be achieved, for instance, by cooking, heat treatment or pre-gelatinization. By way of illustration only, cooking may be performed either in batch at about 95-98°C or by jet-cooking at about 130°C. The particular cooking conditions to be used will readily be determined by a person skilled in the art based on the type and quantity of starch to be solubilised and on the required degree of solubility to be obtained.

According to a further possible embodiment of the present invention, the above process may also include a thinning step. This may be used to reduce the viscosity of the starch mixture defined above to achieve the desired viscosity for use in a particular coating composition. Since the starch mixture includes a previously non-thinned starch and a thinned starch, it will be apparent to the skilled person that, in the resulting thinned mixture, the previously non-thinned material will have a higher average molecular weight than the previously thinned material. The thinning step may be performed before or after cooking using any means known in the art.

**Paper Products**

As noted above, the coating compositions of the present invention will preferably be paper coating compositions. As such, the present invention also provides paper products coated with such coating compositions.

The terms "paper" and "paper product" as used herein refer to sheet material of any thickness, including, for example, paperboard, cardboard and corrugated board. The term "paper web", by contrast, refers to the continuous ribbon of paper, in its full width, at any stage during the paper making process.

Coating of the paper products can be carried out on-line in the paper machine or on a separate coating machine. Methods of applying coating compositions to paper products are well known in the art. They include, for example, air knife coating, rod coating, bar coating, wire bar coating, spray coating, brush coating, cast coating, flexible blade coating, gravure coating, jet applicator coating, short dwell coating, slide hopper coating, curtain coating, flexographic coating, size-press coating, reverse roll coating and transfer roll coating (metered size press or gate roll coating). According to the desired paper or board quality and its end use, it can be coated on only one or on both sides. Each side can be coated only once or a plurality of times, provided that at least one of the coatings is in accordance with the present invention. By way of example, a premium coated paper will typically include a pre-coat, middle-coat and top-coat wherein at least one of the coats is in accordance with the present invention.

After the coating step, the paper is dried and optionally calendered to improve surface smoothness and gloss. Drying methods include, but are not limited to, air or convection drying (e.g. linear tunnel drying, arc drying, air-loop drying, sine curve air float drying, etc.), contact or conduction drying and radiant energy drying (e.g. infrared or microwave drying). Calendering is achieved by passing the coated paper between calender nips or rollers (preferably elastomer coated nips or rollers) one or more times. For best results, calendering should be carried out at elevated temperatures. Ideally for each coating step, a dry coating weight in the range from about 4 to about 30g/m$^2$, preferably from about 6

to about 20g/m$^2$ will be achieved, with a coating thickness of 1-50μm.

The advantage of the starch mixture of the present invention, as suggested above, is that it can be used to replace, in whole or in part, the use of synthetic binders in coating compositions. What's more, it has been found to significantly improve the rheology of the coating compositions without adversely affecting mottling or surface strength (compared to the same compositions containing latex-only binders).

The present invention will now be described in more detail by way of the following nonlimiting examples.

Examples

**Example 1: Pre-coating of double coated fine paper via jet applicator.**

Pre-coating compositions were prepared by jet cooking a starch paste at 130°C and then mixing the cooked starch (whilst still hot, i.e. above 80°C) with pigment. Latex and additives were then added in accordance with the following recipes (where R1 and R2 are reference compositions and S1, S2, S7 and S8 are coating compositions prepared in accordance with the present invention):

| Pre-coat ingredients (in parts) | R1 | R2 | S1 | S2 | S7 | S8 |
|---|---|---|---|---|---|---|
| Coarse Ground Calcium Carbonate | 100 | 100 | 100 | 100 | 100 | 100 |
| Styrene Butadiene Latex | 6 | 3 | 3 | 3 | 3 | 3 |
| Cargill C*Film 07311 | 6 | 9 | - | - | - | - |
| NP1 | - | - | 9 | - | - | - |
| NP2 | - | - | - | 9 | - | - |
| NP3 | - | - | - | - | - | 9 |
| NP4 | - | - | - | - | 9 | - |
| Fluorescence Whitening Agent | 0.2 | 0.2 | 0.2 | 0.2 | 0.2 | 0.2 |
| Polyacrylate Thickener | 0.25 | 0.2 | 0.1 | - | 0.125 | 0.125 |
| Dry Solids (%) | 66.2 | 66.1 | 66.1 | 66.2 | 66,1 | 66,2 |

C*Film 07311 is a corn dextrin. NP1 is a mixture of 90% by weight Cargill C*Film 07325 (corn dextrin) and 10% by weight Cargill C*Gel 04201 (native waxy corn). NP2 is a mixture of 90% by weight Cargill C*Film 07325 and 10% by weight Cargill C*Gel 30002 (native potato). NP3 is a mixture of 90% by weight Cargill C*Film 07325 and 10% by weight Cargill C*Gel 03401 (native corn). NP4 is a mixture of 90% by weight Cargill C*Film 07325 and 10% by weight Cargill C*Gel 20002 (native wheat)

A standard top-coat was also prepared as follows:

| Ingredients (in parts) | Standard Topcoat |
|---|---|
| Fine Ground Calcium Carbonate | 80 |
| Kaolin Clay | 20 |
| Styrene Butadiene Latex | 7 |
| Polyvinyl Alcohol | 0.4 |
| CMC | 0.25 |
| Fluorescence Whitening Agent | 0.2 |
| Dry Solids (%) | 69.1 |

80g/m$^2$ base paper was coated with 11g/m$^2$ pre-coat (free jet applicator, 1200 m/min), followed by 11g/m$^2$ of standard top-coat (free jet applicator, 1200 m/min). The paper was calandered at 400 m/min, 80°C at a nip pressure of 180 kN/m.

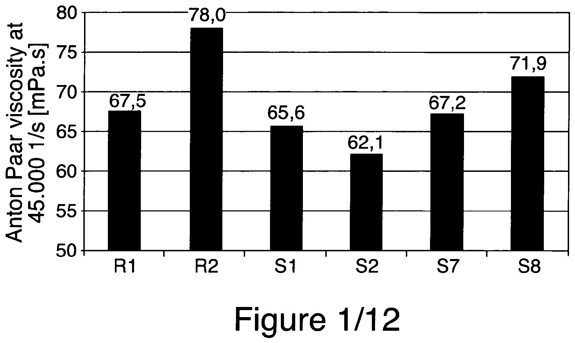

The compositions were analyzed using standard testing methods (see below) and the results of these tests are shown in Figures 1 to 6.

- Anton Paar Viscosity (Method 2 - Figure 1, measured in mPa.s): Anton Paar viscosity is a measurement of the sample's viscosity under high shear conditions. High shear viscosity is an important characteristic of coating compositions due to the high shear conditions needed during application. A lower high shear viscosity is desirable. As can be seen in Figure 1, each of samples S1, S2, S7 and S8 (all of which contain 9 parts starch) all have a lower high shear viscosity than R2 (which also contains 9 parts starch). In fact, the samples made in accordance with the present invention (with the exception of S8) even have lower high shear viscosities than R1, a sample made with only 6 parts starch.

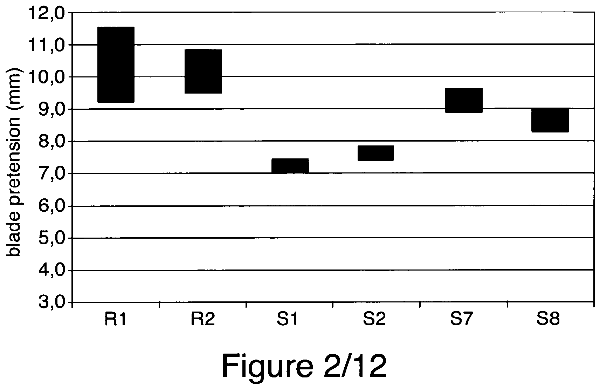

- Blade Pretension (Figure 2, measured in mm): blade pretention is the blade pressure needed on the coater to control coat weight (i.e. to apply a regular thin layer of coating composition to the paper substrate - it is adjusted on the machine to achieve the desired coat weight). Here again, the lower the overall measurement, the better. It is measured at the beginning of the trial point (start) and at the end of the trial point (stop). Since a big difference between the two measurements would indicate a substantial increase in viscosity, the smaller the difference the better. As can be seen in Figure 2, the samples made in accordance with the present invention have a significantly better performance (lower blade pretension and less viscosity increase) than the reference samples.

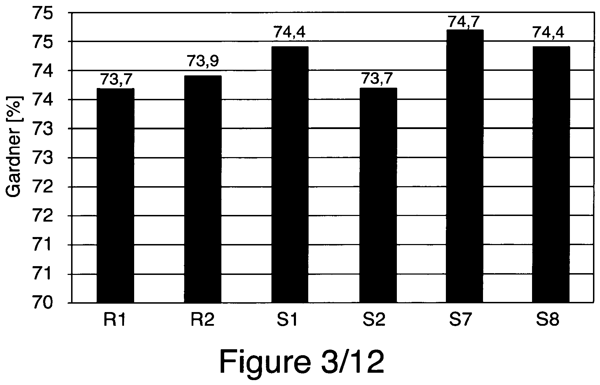

- Gardner Paper Gloss (Method 5 - Figure 3, measured in %): Gardner Paper Gloss measures the level of reflectance of a coated paper. The higher the reflectance, the better. As can be seen in Figure 3, the samples made in accordance with the present invention perform at least as well, if not better, than the reference samples.

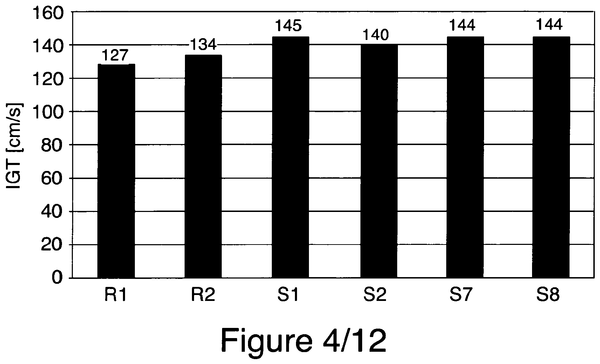

- IGT Pick-Dry Test (Method 7 - Figure 4, measured in cm/s): the IGT test measures the strength of coated papers. Here again, the greater the strength, the better. As can be seen in Figure 4, the samples made in accordance with the present invention perform at least as well, if not better, than the reference samples.

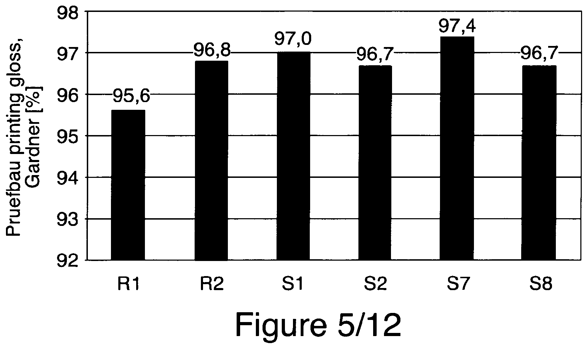

- Prüfbau Printing Gloss (Method 6 - Figure 5, measured in %): Prüfbau Printing Gloss measures the level of reflectance of a coated paper surface after printing. The higher the reflectance, the better. As can be seen in Figure 5, the samples made in accordance with the present invention have a much higher printing gloss than the reference samples.

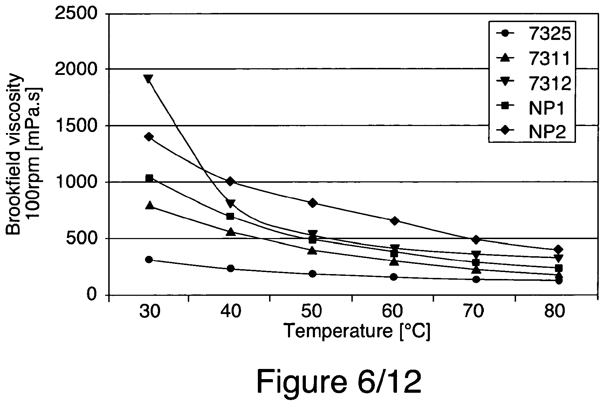

- Brookfield Viscosity (Method 10 - Figure 6, measured in mPa.s): Brookfield viscosity is used to measure low shear viscosity and this particular test was used to assess low shear stability over increasing temperatures, with greater stability and being advantageous. Brookfield viscosity was measured for several starch samples, including different thinned starches and two starch mixtures of the present invention. As shown in Figure 6, the starch mixtures of the present invention have better stability than 7312 (i.e. no or reduced set-back). What's more they have better (i.e. higher) low shear viscosity than standard thinned starches when used alone.

As can be seen from these results, coating compositions prepared in accordance with the present invention have significantly reduced high shear viscosity. This improvement in rheology leads to a reduction in required coater blade pressure resulting in better coater runnability and improved production efficiency (with less paper breaks) without any deterioration in paper quality. Starch mixtures of the invention allow for better starch paste stability and higher starch utilization in the coating composition which, among other advantages, will also lead to cost savings and the possibility of higher dry solids use.

**Example 2: Rheology of Coating Colour (single coating)**

Coating compositions were prepared by jet cooking a starch paste at 130°C and then mixing the cooked starch (whilst still hot, i.e. above 80°C) with pigment. Latex and additives were then added in accordance with the following recipes (where R3 is a reference composition and S3 and S4 are coating compositions prepared in accordance with the present invention):

| Coating ingredients (in parts) | R3 | S3 | S4 |
|---|---|---|---|
| Ground Calcium Carbonate* | 90 | 90 | 90 |
| Kaolin clay | 10 | 10 | 10 |
| Styrene Butadiene Latex | 4 | 4 | 4 |

(continued)

| Coating ingredients (in parts) | R3 | S3 | S4 |
|---|---|---|---|
| Cargill C*Film 07312 | 8.5 | - | - |
| NP1 | - | 8,5 | - |
| NP2 | - | - | 8.5 |
| Lubricating Agent | 0.4 | 0.4 | 0.4 |
| Fluorescence Whitening Agent | 0.5 | 0.5 | 0.5 |
| Dry Solids (%) | 64.9 | 65.1 | 65 |

The calcium carbonate was selected to have a narrow particle size distribution. C*Film 07312 is a corn dextrin.

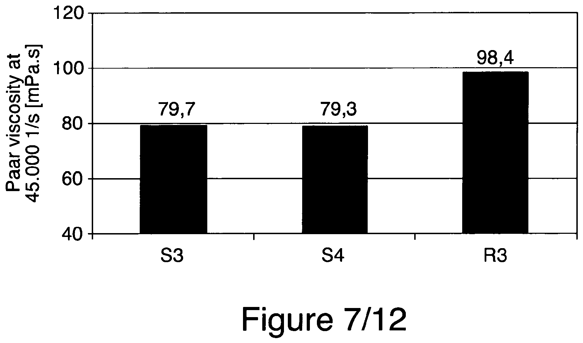

The compositions were analyzed using the Anton Paar high shear viscosity test (as described above) and the results of this test are shown in Figure 7. As can be seen, coating compositions prepared in accordance with the present invention have a significantly reduced high shear viscosity compared to the reference.

**Example 3: Rheology of Pre-Coating Colour (double coating)**

Pre-coating compositions were prepared by jet cooking a starch paste at 130°C and then mixing the cooked starch (whilst still hot, i.e. above 80°C) with pigment. Latex and additives were then added in accordance with the following recipes (where R4 and R5 are reference compositions and S5 and S6 are coating compositions prepared in accordance with the present invention):

| Pre-coat ingredients (in parts) | R4 | R5 | S5 | S6 |
|---|---|---|---|---|
| Coarse Ground Calcium Carbonate | 100 | 100 | 100 | 100 |
| Styrene Butadiene Latex | 3 | 3 | 3 | 3 |
| C*Film 07325 | 9 | - | - | - |
| C*Film 07312 | - | 9 | - | - |
| NP1 | - | - | 9 | - |
| NP2 | - | - | - | 9 |
| Fluorescence Whitening Agent | 0.2 | 0.2 | 0.2 | 0.2 |
| Polyacrylate Thickener | 0.3 | 0.125 | 0.15 | 0.11 |
| Dry Solids (%) | 66 | 66 | 66.1 | 66 |

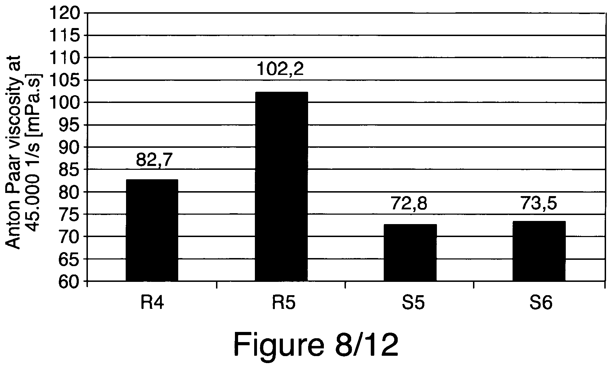

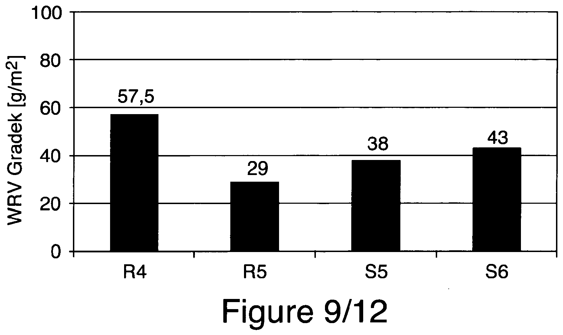

The compositions were analyzed using the Anton Paar high shear viscosity and WRV Gradek tests and the results of these tests are shown in Figures 8 and 9.

- WRV Gradek (Method 4 - Figure 9, measured in $g/m^2$): WRV Gradek is a measure of water release. The lower the water release the better, because better water retention contributes to better coating colour stability. Indeed, a too high water release would lead to increased solid levels under the coating blade leading, in turn, to increased viscosity and therefore poor runnability.

As can be seen, coating compositions prepared in accordance with the present invention have a significantly reduced high shear viscosity and lower water release values compared to R4. They have greater water release values than R5. However, R5 has a very high high-shear viscosity (see Figure 8) and is therefore not suitable for use as a coating composition. Thus, the compositions of the present invention show a good balance of low high-shear viscosity and low water release compared to the references.

**Example 4: Pre-coating of double coated fine paper via jet applicator.**

Pre-coating compositions were prepared by jet cooking a starch paste at 130°C and then mixing the cooked starch (whilst still hot, i.e. above 80°C) with pigment. Latex and additives were then added in accordance with the following recipes (where R1 and R2 are reference compositions and S1, S8, S9 and S10 are coating compositions prepared in accordance with the present invention):

| Pre-coat ingredients (in parts) | R1 | R2 | S1 | S8 | S9 | S10 |
|---|---|---|---|---|---|---|
| Coarse Ground Calcium Carbonate | 100 | 100 | 100 | 100 | 100 | 100 |
| Styrene Butadiene Latex | 6 | 3 | 3 | 3 | 3 | 3 |
| Cargill C*Film 07311 | 6 | 9 | - | - | - | - |
| NP1 | - | - | 9 | - | - | - |
| NP5 | - | - | - | - | 9 | - |
| NP3 | - | - | - | 9 | - | - |
| NP6 | - | - | - | - | - | 9 |
| Fluorescence Whitening Agent | 0.2 | 0.2 | 0.2 | 0.2 | 0.2 | 0.2 |
| Polyacrylate Thickener | 0.25 | 0.2 | 0.1 | 0.125 | 0.1 | 0.15 |
| Dry Solids (%) | 66.2 | 66.1 | 66.1 | 66.2 | 66.0 | 65.5 |

NP5 is a mixture of 90% by weight Cargill C*Film 07325 and 10% by weight Cargill C* 06305 (acetylated waxy corn). NP6 is a mixture of 90% by weight Cargill C*Film 07325 and 10% by weight Cargill C* 05700 (cross-linked corn).

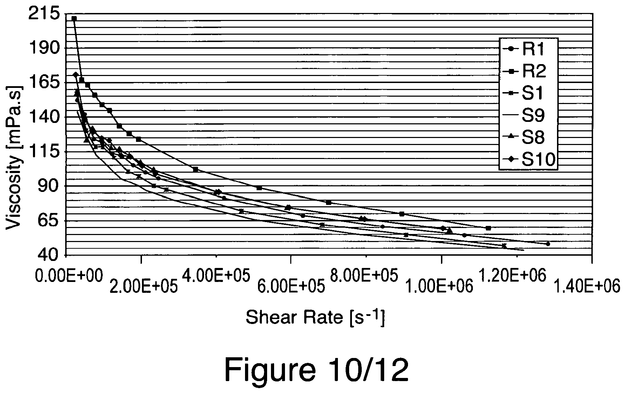

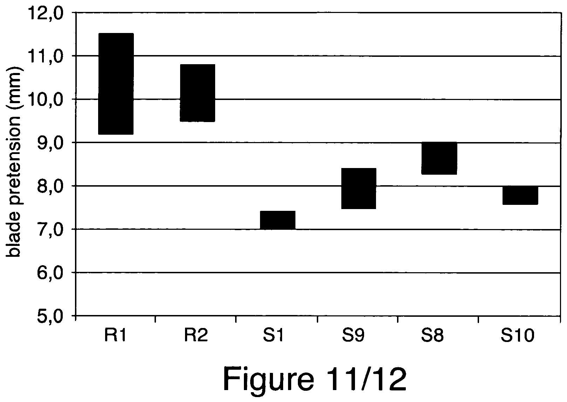

The compositions were analyzed using standard testing methods (see below) and the results of these tests are shown in Figures 10 and 11.

- ACAV Capillary Viscosity (Method 3 - Figure 10, measured in mPa.s): ACAV Capillary Viscosity is measurement of very high shear viscosity. It was measured at different shear rates and, as shown in Figure 10, the high shear behavior of a different coating composition varied depending on the type of starch used in its preparation. A lower high shear viscosity and a greater stability are desirable.

- Blade Pretension (Figure 11, measured in mm): blade pretension measurements are described above (see Example 1). As can be seen in Figure 11, compositions prepared in accordance with the present invention perform significantly better than the reference samples.

## Example 5: Rheology of Pre-Coating Compositions

Reference compositions R2, R4 and R5 were prepared as described above. The following compositions, in accordance with the present invention, were also prepared:

- S1: as described in Example 1 with a 90:10 mixture of thinned starch and waxy corn starch, together with two further compositions, identical to S1 except that the starch mixture is in a ratio of 95:5 ($S1_{5\%}$) or of 85:15 ($S1_{15\%}$).
- S2: as described in Example 1 with a 90:10 mixture of thinned starch and potato starch, together with two further compositions, identical to S2 except that the starch mixture is in a ratio of 95:5 ($S2_{5\%}$) or of 85:15 ($S2_{15\%}$).
- S8: as described in Example 1 with a 90:10 mixture of thinned starch and corn starch, together with two further compositions, identical to S8 except that the starch mixture is in a ratio of 95:5 ($S8_{5\%}$) or of 85:15 ($S8_{15\%}$).

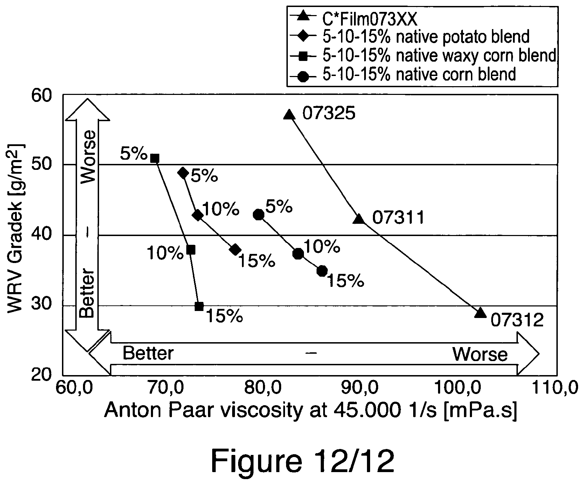

The compositions were analyzed using standard testing methods (see below) and the results of these tests are shown in Figure 12.

The test illustrated in Figure 12 plots WRV against Anton Paar high shear viscosity and shows that compositions of the present invention perform better than compositions prepared with thinned starches alone. In other words, they have a far better balance of low high-shear viscosity and low water release compared to the reference compositions.

Methods

**Method 1 - Cold Water Solubility**

Determine the percent dry substance (DS) of a sample by drying 5g for 4 hours at 120°C under vacuum.

Weigh 2g of sample and transfer to a dry 200ml Kohlrausch flask. Partially fill with water at 25°C. Shake vigorously until completely in suspension and dilute to volume. Stopper flask and shake gently while submerged in a water bath at 25°C for a total agitation time of 1 hour.

Filter through a Whatman No. 2V paper, returning the first portion of filtrate. Measure 50ml of filtrate and transfer to a weighed evaporating dish.

Evaporate to dryness on a steam bath and dry in a vacuum oven for 1 hour at 100°C. Cool in a desiccator and weigh to the nearest mg.

$$DS, \% = 100 - [(\text{loss in weight, g} \times 100) / (\text{sample weight, g})]$$

$$\text{Solubles, } \% = (\text{residue weight, g} \times 100) / [0.25 \times \text{sample weight, g} \times (DS, \% / 100)]$$

To calculate solubility at pH 10 and 35°C, replace the water at 25°C with water at 35°C and adjust the pH to pH 10 with NaOH, then keep in a water bath at 35°C.

**Method 2 - Anton Paar Viscosity**

  Anton Paar viscometer MCR 101
  Beaker C-CC 27-SS
  Measurement body B-CC 28.7
  Circulation cooler Julabo AWC 100

Manufacturer's instructions are followed and viscosity is measured at 45000 1/s.

**Method 3 - ACAV Capillary Viscosity**

Apparatus: ACAV A2 Viscoeter (capillary).
Manufacturer's instructions are followed to measure viscosity at 100 1/s - 1000 000 1/s.

**Method 4 - AA-GWR Water Release Test**

  ÅA - GWR WRV-apparatus
  Injection (10 mL)
  Thermometer
  Filter paper (blue ribbon)
  Millipore filter (5 Pm pore size)
  Balance (sensibility: 0,001g)

Both control levers - "Pressure" and "Cylinder" - have to be in the "off" position (downwards). At least three filter papers should be weighed and the figure logged (weight 1). The filters have to be placed on the rubberized plate and the Millipore filter is then placed on the filter papers with the shiny side up. Then the cylinder is placed on the plate with the ceiling upward. The whole composition is put on the metal plate and risen up by switching the "Cylinder" lever. The sample is tempered to 30°C and 10 ml of the coating colour is filled into the cylinder with a syringe. The rubber should be free from coating colour to avoid leakage.

The device has to be closed with the plug and the pressure is switched on with the "Pressure" lever and adjusted to 1 bar. At the same time the stop-watch is started. After two minutes, the pressure is stopped and the cylinder let down. The whole composition - plate, filters and cylinder - is removed and turned over a wash-basin and the filter paper is taken and weighed. This gives weight 2. Water release is calculated as follows: WRV [g/m2] = (weight 2 - weight 1) * 1250.

## Method 5 - Gardner Paper Gloss 75°

This test is performed according to DIN 67530.

## Method 6 - Prüfbau Printing Gloss

Apparatus: Prufbau apparatus
Printing ink: Lorilleux Rouge, Brilliant Standard 3810 (red)
Ink amount: $0.200cm^3$ for coated papers, $0.250cm^3$ for uncoated papers
Time for ink distribution: 60 s
Time for inking: 30 s
Number of prints per inking: 3
Re-inking: none
Pressure: 800 N
Speed: 1 m/s (constant)
Printing disc: Rubber 4 cm
Weighing unit: +/- 0.1 mg
Size of test strip: width: 4.7 cm; length: 25 cm

The exact ink amount on the paper surface should be determined in mg or g by using an analytical balance (+/- 0.1 mg or +/- 0.0001 g exactly). The applied ink amount can be calculated by weighing the inked printing disc before and after printing (note: a rubber disc is typically used but may be replaced by an aluminum disk if picking is observed). Coat weight in $g/m^2$ = coat weight in mg divided by 8 or coat weight in g multiplied by 125 (printed area = 800 $cm^2$). 3 strips should be printed on each side. After drying the printed papers are placed in a conditioned room (23°C - 50% humidity) for 24 hours. The printing gloss should be determined with a Gardner gloss meter (10 measurements on each strip). The printing gloss should be calculated to a coat weight of 1.2 $g/m^2$ for coated papers and 1.5 $g/m^2$ for uncoated papers by using regression analysis (either with calculator or Nomo-diagram).

## Method 7 - IGT Pick-Dry Test

This test is performed according to ISO 3783.

## Method 8 - Brookfield viscosity

The sample is filled into a 600ml glass beaker (wide design) and temperature adjusted depending on the sample:

Thinned Starches (25% dry substance - after batch cooking): 40°C
Starch Paste of Example 1 (35% dry substance - after jet cooking): from 80°C to 30°C in 10°C steps.

Depending on the viscosity of the sample, a spindle is selected according to manufacturer's instructions and fixed carefully on a Brookfield Viscometer RVF 100 or RVDVI+. The glass beaker is then placed on the viscometer (set at 100 rpm), checking that the spindle is at least partially covered by the sample. Manufacturer's instructions are followed to measure the viscosity of the sample.

## Method 9 - Starch Cooking

Jet Cooking: Prepare a starch slurry (starch or starch mixture + water) to 35% dry substance. Cook in a jet cooker at 130°C for 1 to 3 minutes.
Batch Cooking: Prepare a starch slurry (starch + water) to 25% dry substance in a 600g beaker. Mix with a plastic rod to obtain homogeneous slurry. Introduce a paddle into the beaker, cover the beaker with a lid and connect the paddle to a stirrer over a boiling water bath). Start agitation as quickly as possible at 250 rpm and immediately start the stopwatch. Cook for 30 minutes before removing the beaker from the boiling water bath and placing it in a cooling bath (still under agitation) to stop cooking.

**Claims**

1. A coating composition comprising:

   (a) a non-thinned starch;
   (b) a thinned starch; and
   (c) pigment;

   **characterized in that** the non-thinned starch is selected from the group consisting of: native starches, acetylated starches, cross-linked starches and mixtures thereof; the thinned starch is a dextrin; and **in that** the non-thinned and thinned starches are present in a weight ratio of 30:70 to 1:99.

2. A coating composition according to claim 1, **characterized in that** the non-thinned starch is a waxy starch.

3. A coating composition according to any one of the preceding claims, **characterized in that** the thinned starch is selected from the group consisting of: thinned wheat starch, thinned corn starch and mixtures thereof.

4. A coating composition according to any one of the preceding claims, **characterized in that** it comprises the non-thinned and thinned starches in a weight ratio of 15:85 to 5:95.

5. A coating composition according to any one of the preceding claims, **characterized in that** it comprises the non-thinned and thinned starches in a weight ratio of about 10:90.

6. A coating composition according to any one of the preceding claims, **characterized in that** it further comprises one or more thinning agents.

7. A coating composition according to any one of the preceding claims, **characterized in that** it further comprises one or more synthetic binders, one or more thickeners and/or one or more additives.

8. A coating composition according to claim 7, **characterized in that** the one or more synthetic binders are selected from the group consisting of: styrene butadiene, styrene acrylate, vinyl polymer based latexes, polyvinyl alcohol and mixtures of two or more thereof.

9. A process for producing a coating composition, **characterized in that** it comprises the step of mixing (a) a non-thinned starch and (b) a thinned starch with (c) pigment and (d) one or more optional ingredients, wherein the non-thinned starch is selected from the group consisting of: native starches, acetylated starches, cross-linked starches and mixtures thereof; the thinned starch is a dextrin; and the non-thinned and thinned starches are present in a weight ratio of 30:70 to 1:99.

10. A process according to claim 9, **characterized in that** it further includes the step of solubilising the non-thinned starch and/or the thinned starch before mixing with the pigment.

11. A process according to claim 10, **characterized in that** the solubilisation step includes a cooking step.

12. Use of a blend of (a) a non-thinned starch and (b) a thinned starch, to replace, in whole or in part, synthetic binders in coating compositions, **characterized in that** the non-thinned starch is selected from the group consisting of: native starches, acetylated starches, cross-linked starches and mixtures thereof; the thinned starch is a dextrin; and **in that** the non-thinned and thinned starches are present in a weight ratio of 30:70 to 1:99.

**Patentansprüche**

1. Beschichtungszusammensetzung, umfassend:

   a) eine nicht verdünnte Stärke;
   b) eine verdünnte Stärke; und
   c) Pigment;

**dadurch gekennzeichnet, dass** die nicht verdünnte Stärke aus der Gruppe ausgewählt ist, bestehend aus: nativen Stärken, acetylierten Stärken, vernetzten Stärken und Gemischen davon; die verdünnte Stärke ein Dextrin ist; und dadurch, dass die nicht verdünnten und verdünnten Stärken in einem Gewichtsverhältnis von 30:70 bis 1:99 vorliegen.

2. Beschichtungszusammensetzung nach Anspruch 1, **dadurch gekennzeichnet, dass** die nicht verdünnte Stärke eine Wachsstärke ist.

3. Beschichtungszusammensetzung nach einem der vorstehenden Ansprüche, **dadurch gekennzeichnet, dass** die verdünnte Stärke aus der Gruppe ausgewählt ist, bestehend aus: verdünnter Weizenstärke, verdünnter Maisstärke und Gemischen davon.

4. Beschichtungszusammensetzung nach einem der vorstehenden Ansprüche, **dadurch gekennzeichnet, dass** sie die nicht verdünnten und verdünnten Stärken in einem Gewichtsverhältnis von 15:85 bis 5:95 umfasst.

5. Beschichtungszusammensetzung nach einem der vorstehenden Ansprüche, **dadurch gekennzeichnet, dass** sie die nicht verdünnten und verdünnten Stärken in einem Gewichtsverhältnis von etwa 10:90 umfasst.

6. Beschichtungszusammensetzung nach einem der vorstehenden Ansprüche, **dadurch gekennzeichnet, dass** sie weiter ein oder mehrere Verdünnungsmittel umfasst.

7. Beschichtungszusammensetzung nach einem der vorstehenden Ansprüche, **dadurch gekennzeichnet, dass** sie weiter ein oder mehrere synthetische Bindemittel, ein oder mehrere Verdickungsmittel und/oder einen oder mehrere Zusatzstoffe umfasst.

8. Beschichtungszusammensetzung nach Anspruch 7, **dadurch gekennzeichnet, dass** das eine oder die mehreren synthetischen Bindemittel aus der Gruppe ausgewählt sind, bestehend aus: Styrolbutadien, Styrolacrylat, Latexen auf Vinylpolymerbasis, Polyvinylalkohol und Gemischen von zwei oder mehreren davon.

9. Verfahren zur Herstellung einer Beschichtungszusammensetzung, **dadurch gekennzeichnet, dass** es den Schritt des Mischens (a) einer nicht verdünnten Stärke und (b) einer verdünnten Stärke mit (c) Pigment und (d) einem oder mehreren optionalen Bestandteilen umfasst, wobei die nicht verdünnte Stärke aus der Gruppe ausgewählt ist, bestehend aus: nativen Stärken, acetylierten Stärken, vernetzten Stärken und Gemischen davon; die verdünnte Stärke ein Dextrin ist; und die nicht verdünnten und verdünnten Stärken in einem Gewichtsverhältnis von 30:70 bis 1:99 vorliegen.

10. Verfahren nach Anspruch 9, **dadurch gekennzeichnet, dass** es weiter den Schritt des Lösens der nicht verdünnten Stärke und/oder der verdünnten Stärke vor dem Mischen mit dem Pigment einschließt.

11. Verfahren nach Anspruch 10, **dadurch gekennzeichnet, dass** der Lösungsschritt einen Kochschritt einschließt.

12. Verwendung einer Mischung aus (a) einer nicht verdünnten Stärke und (b) einer verdünnten Stärke, um synthetische Bindemittel in Beschichtungszusammensetzungen vollständig oder teilweise zu ersetzen, **dadurch gekennzeichnet, dass** die nicht verdünnte Stärke aus der Gruppe ausgewählt ist, bestehend aus: nativen Stärken, acetylierten Stärken, vernetzten Stärken und Gemischen davon; die verdünnte Stärke ein Dextrin ist; und die nicht verdünnten und verdünnten Stärken in einem Gewichtsverhältnis von 30:70 bis 1:99 vorliegen.

**Revendications**

1. Composition d'enrobage comprenant :

   (a) un amidon non fluidifié ;
   (b) un amidon fluidifié ; et
   (c) un pigment;

   **caractérisée en ce que** l'amidon non fluidifié est sélectionné dans le groupe constitué : des amidons natifs, des amidons acétylés, des amidons réticulés et des mélanges de ceux-ci ; l'amidon fluidifié est une dextrine ; et **en ce**

**que** les amidons non fluidifié et fluidifié sont présents dans un rapport en poids de 30 : 70 à 1 : 99.

2. Composition d'enrobage selon la revendication 1, **caractérisée en ce que** l'amidon non fluidifié est un amidon cireux.

3. Composition d'enrobage selon l'une quelconque des revendications précédentes, **caractérisée en ce que** l'amidon fluidifié est sélectionné dans le groupe constitué : d'un amidon de blé fluidifié, d'un amidon de maïs fluidifié et des mélanges de ceux-ci.

4. Composition d'enrobage selon l'une quelconque des revendications précédentes, **caractérisée en ce qu'**elle comprend les amidons non fluidifié et fluidifié dans un rapport en poids de 15 : 85 à 5 : 95.

5. Composition d'enrobage selon l'une quelconque des revendications précédentes, **caractérisée en ce qu'**elle comprend les amidons non fluidifié et fluidifié dans un rapport en poids de 10 : 90.

6. Composition d'enrobage selon l'une quelconque des revendications précédentes, **caractérisée en ce qu'**elle comprend en outre un ou plusieurs agents fluidifiants.

7. Composition d'enrobage selon l'une quelconque des revendications précédentes, **caractérisée en ce qu'**elle comprend en outre un ou plusieurs liants synthétiques, un ou plusieurs épaississants et/ou un ou plusieurs additifs.

8. Composition d'enrobage selon la revendication 7, **caractérisée en ce que** les un ou plusieurs liants synthétiques sont sélectionnés dans le groupe constitué : d'un styrène butadiène, d'un styrène acrylate, des latex à base de polymères de vinyle, d'un polyalcool vinylique et des mélanges de deux ou plus de deux de ceux-ci.

9. Procédé de production d'une composition d'enrobage, **caractérisé en ce qu'**il comprend l'étape de mélange (a) d'un amidon non fluidifié et (b) d'un amidon fluidifié avec (c) un pigment et (d) un ou plusieurs ingrédients facultatifs, dans lequel l'amidon non fluidifié est sélectionné dans le groupe constitué : des amidons natifs, des amidons acétylés, des amidons réticulés et des mélanges de ceux-ci ; l'amidon fluidifié est une dextrine ; et les amidons non fluidifié et fluidifié sont présents dans un rapport en poids de 30 : 70 à 1 : 99.

10. Procédé selon la revendication 9, **caractérisé en ce qu'**il comprend en outre l'étape de solubilisation de l'amidon non fluidifié et/ou de l'amidon fluidifié avant le mélange avec le pigment.

11. Procédé selon la revendication 10, **caractérisé en ce que** l'étape de solubilisation comprend une étape de cuisson.

12. Utilisation d'un mélange contenant (a) un amidon non fluidifié et (b) un amidon fluidifié, pour remplacer, en totalité ou en partie, les liants synthétiques dans les compositions d'enrobage, **caractérisée en ce que** l'amidon non fluidifié est sélectionné dans le groupe constitué : des amidons natifs, des amidons acétylés, des amidons réticulés et des mélanges de ceux-ci ; l'amidon fluidifié est une dextrine ; et **en ce que** les amidons non fluidifié et fluidifié sont présents dans un rapport en poids de 30 : 70 à 1: 99.

Figure 1/12

Figure 2/12

Figure 3/12

Figure 4/12

Figure 5/12

Figure 6/12

Figure 7/12

Figure 8/12

Figure 9/12

Figure 10/12

Figure 11/12

Figure 12/12